(19) **Europäisches Patentamt**

**European Patent Office**

**Office européen des brevets**

(11) **EP 0 797 108 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.⁷: **G01S 17/46**

(21) Anmeldenummer: **96104405.4**

(22) Anmeldetag: **20.03.1996**

(54) **Verfahren zur optischen Messung von relativen Winkeln**

Method for the optical measurement of relative angles

Procédé de mesure optique d'angles relatifs

(84) Benannte Vertragsstaaten:
**AT CH DE FI FR GB IT LI NL SE**

(43) Veröffentlichungstag der Anmeldung:
**24.09.1997 Patentblatt 1997/39**

(73) Patentinhaber: **J. MÜLLER AG**
**CH-8307 Effretikon (CH)**

(72) Erfinder: **Jäger, Heinz**
**8604 Volketswil (CH)**

(74) Vertreter: **Troesch Scheidegger Werner AG**
**Patentanwälte**
**Postfach**
**8032 Zürich (CH)**

(56) Entgegenhaltungen:
**WO-A-89/11709          WO-A-94/00778**
**DE-A- 3 700 009**

**Beschreibung**

Die vorliegende Erfindung betrifft ein Verfahren zur optischen Messung der relativen Winkel zwischen einer Messeinrichtung und davon entfernten Messpunkten mittels von der Messeinrichtung ausgehenden optischen, zu einem Band aufgefächerten Strahlen, welche mittels an den Messpunkten angebrachten Reflektionsmitteln zur Messeinrichtung zurückgespiegelt werden und von der Messeinrichtung empfangen werden, wobei der ausgehende . Lichtstrahl um eine Achse der Messeinrichtung verschwenkt resp. rotiert wird, und dass beim Durchgang des Lichtstrahls durch den Beginn eines bezüglich der Messeinrichtung bestimmten Winkelbereiches mit einem Zähltakt zu zählen begonnen wird, bis der Lichtstrahl das Ende des Winkelbereiches erreicht hat, und beim Empfangen eines reflektierten, zurückgespiegelten Lichtstrahls der jeweilige Zählerstand gespeichert wird und die relativen Winkel durch Auswertung der Verhältnisse der Zählerstände berechnet werden, sowie eine Messeinrichtung zur Durchführung des Verfahrens.

Ein derartiges Verfahren ist beispielsweise aus.der PCT Anmeldung WO 94/00778 bekannt. Darin wird ein Verfahren zur Messung von Winkeln zwischen einer Messplattform und Messpunkten dargestellt, bei welchem ein zu einem ebenen Band aufgefächerter Lichtstrahl um die Hochachse der Messplattform verschwenkt wird und mittels an den Messpunkten angebrachten Reflektionsmitteln zur Messplattform zurückgespiegelt wird. In der Messplattform ist eine Zählvorrichtung vorhanden, welche jeweils beim Durchgang des aufgefächerten Lichtstrahles durch eine definierte Anfangsposition mit einem Zähltakt zu zählen beginnt, und jeweils beim Empfang eines reflektierten Lichtstrahls den Zählerstand speichert. Aus dem Verhältnis der Zählerstände untereinander kann der relative Winkel zwischen dem Reflektionsmittel und der Ausgangsposition der Messplattform berechnet werden.

Es hat sich nun gezeigt, dass insbesondere die Genauigkeit dieses bekannten Verfahrens bei unterschiedlichen Verhältnissen der Messplattform, insbesondere bei bezüglich den Reflektionsmitteln bewegter Messplattform, nicht den Anforderungen entsprechend genügend genaue Resultate geliefert werden. Weiter ist auch eine direkte Distanzberechnung zwischen Messplattform und Reflektionsmitteln mit dem herkömmlichen Verfahren resp. den bekannten Vorrichtungen nicht möglich, sondern muss mit separaten Mitteln erfolgen.

Weiter ist aus der WO 89/11709 eine Vorrichtung bekannt, welche durch Aussenden von Lichtstrahlen um sich herum Objekte erfassen und deren Distanz bestimmen kann. Dabei werden einerseits rotierend um eine Achse angeordnete Lichtsender und Lichtempfänger eingesetzt, wobei sich jeweils ein Paar von zugehörigen Lichtsendern und - empfängern diametral gegenüberliegen. Die Lichtsender sind dabei jeweils Paarweise in entgegengesetzter Richtung tangential zur Achse aussendender Richtung angeordnet, wobei insgesamt zwei Paare um 90° zueinander versetzt angeordnet sind. Diese Vorrichtung eignet sich insbesondere für das Feststellen von beweglichen Objekten im Raum und dem Feststellen derer relativer Bewegungen zur Vorrichtung, und wird beispielsweise als Bewegungsmelder für eine Alarmvorrichtung eingesetzt. Für eine exakte Messungen von Messpunkten eignet sich diese Vorrichtung aufgrund der grossen Ungenauigkeit allerdings ebenfalls nicht.

Die Aufgabe der vorliegenden Erfindung lag nun darin, das bekannte Verfahren derart zu verbessern, dass einerseits eine direkte Distanzmessung möglich ist und andererseits die Genauigkeit der Messresultate auch für laufend ändernde Bedingungen der Messplattform, insbesondere der Geschwindigkeit der Messplattform gegenüber den Reflektionsmitteln, gesteigert wird.

Diese Aufgabe wird erfindungsgemäss durch das Kennzeichen von Anspruch 1 gelöst.

Weitere, bevorzugte Ausführungsformen der Erfindung ergeben sich aus den abhängigen Ansprüchen 2 bis 4.

Erfindungsgemäss wird zur Durchführung des Verfahrens eine Messvorrichtung entsprechend Anspruch 5 vorgeschlagen.

Weitere bevorzugte Ausführungsformen der Messvorrichtung ergeben sich aus den abhängigen Ansprüchen 6 bis 8.

Die symmetrische Anordnung von vier Lichtsendern auf einer zur Drehachse konzentrischen Kreisbahn mit tangentialer Lichtaussendung bezüglich der Drehachse ermöglicht die direkte Distanzmessung zu den Referenzmarkierungen. Weiter ergibt sich durch Anordnung der vier Lichtsendem eine Steigerung der Genauigkeit, da die Winkel- und Distanzwerte aufgrund mehrer Messwerte während einer Umdrehung gemittelt werden können.

Die erfindungsgemässe Anordnung erlaubt auch eine problemlosere Installation der Lichtsender und Lichtempfänger im Gehäuse der Messvorrichtung, da diese nicht mehr gegen das Zentrum des Gehäuses gerichtet eingebaut werden müssen.

Das erfindungsgemässe Verfahren resp. die erfindungsgemässen Vorrichtungen eignen sich insbesondere für Messungen von fahrenden Plattformen aus, wie beispielsweise Schienenfahrzeugen.

Ausführungsbeispiele der Erfindung werden nachstehend anhand von Zeichnungen noch näher erläutert. Es zeigen

Fig. 1 den Längsschnitt durch eine herkömmliche Messvorrichtung;

Fig. 2 schematisch den Messvorgang nach herkömmlicher Methode;

Fig. 3 schematisch den erfindungsgemässen Messvorgang für den Azimutwinkel;

Fig. 4 schematisch den erfindungsgemässen Messvorgang zur Messung des Elevationswinkel;

Fig. 5 schematisch den erfindungsgemässen Messvorgang zur Messung der Distanz;

Fig. 6 schematisch die Winkelbereiche der Lichtsender einer erfindungsgemässen Messvorrichtung; und

Fig. 7 schematisch die Berücksichtigung der Bewegung der Messvorrichtung bei der Berechnung der Winkel und Distanz.

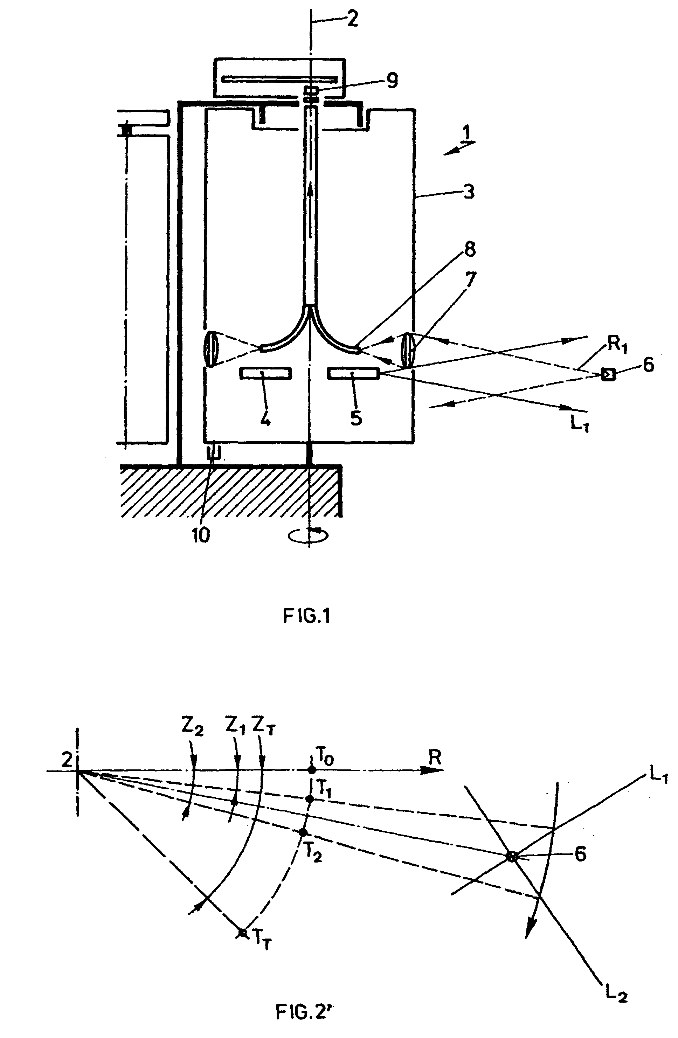

In Figur 1 ist nun eine herkömmliches Messeinrichtung 1 für die optische Messung von relativen Winkeln zwischen dieser Einrichtung und davon beabstandeten Referenzmarkierungen 6 dargestellt. Im zylindrischen, um die Hochachse 2 rotierbaren Gehäuse 3 sind beispielsweise zwei Lichtsender 4,5 radial senkrecht zur Hochachse 2 angeordnet. Diese Lichtsender 4,5 senden zu einer Ebene aufgefächerte Lichtstrahlen $L_1$ radial bezüglich der Hochachse aus. Wenn ein solcher Lichtstrahl $L_1$ auf eine Referenzmarkierung 6 auftrifft, so wird dieser als Reflexionsstrahl $R_1$ reflektiert und über die Linse 7 und einer Faseroptik 8 von einem lichtempfindlichen Sensor 9 empfangen.

Die Lichtfächer $L_{1,2}$ werden vorzugsweise in einem Winkel von 45° bezüglich der Horizontalen aufgefächert, wobei die beiden von den Lichtsendern 4 und 5 erzeugten Lichtfächer zueinander senkrecht ausgerichtet angeordnet sind.

Mit einer derartige Einrichtung können nun die relativen Winkel von der Messeinrichtung zur den Referenzmarkierungen, wie schematisch in Figur 2 dargestellt berechnet werden. Bei jedem Umgang des Gehäuses 3 wird in einer bestimmten Lage ein Zähler auf Null gesetzt, $T_0$, und beginnt mit einem bestimmten Zähltakt zu zählen. Diese Auslösung des Zählers erfolgt beispielsweise durch einen elektrischen/optischen Kontakt 10 am Gehäuse 3 der Messeinrichtung. Sobald der Sensor 9 ein reflektiertes Signal empfängt, beispielsweise beim Durchgang des Lichtfächers $L_1$ durch die Referenzmarkierung 6, wird der entsprechende Zählerstand, $T_1$, gespeichert. Dasselbe erfolgt beim Durchgang des zweiten Lichtfächers $L_2$, wobei hier der Zählerstand $T_2$ gespeichert wird. Der Zähler wird beim Erreichen eines bestimmten, definierten Umgangswinkels $Z_T$ gestoppt und als $T_T$ gespeichert. Aufgrund dieser Werte können nun die relativen Winkel $Z_{1,2}$ bezüglich der definierten Referenzrichtung R einfach durch das Verhältnis der Zählerstände $T_{1,2}$ zum Zählerstand $T_T$ berechnet werden. Diese Berechnung hat den Vorteil, dass sie unabhängig von der Rotationsgeschwindigkeit ist, d.h. dass Schwankungen der Rotationsgeschwindigkeit automatisch kompensiert sind.

Die Verwendung von zwei Lichtfächern $L_1$ und $L_2$, welche in einem bestimmten Winkel zueinander ausgerichtet sind, wie hier beispielsweise 90°, erlaubt die Berechung der beiden räumlichen Winkel Elevation und Azimut bezüglich der Lichtsenders 4,5 resp. der Linse 7. In Figur 2 ist dies durch die Darstellung der beiden Lichtfächer $L_1, L_2$ als senkrecht aufeinanderstehende Linien durch die Referenzmarkierung 6 angedeutet. Die gestrichelten, vom Zentrum 2 ausgehenden Linien stellen dabei diejenigen Winkelwerte dar, bei welchen die Lichtsignal $L_1, L_2$ von der Referenzmarkierung 6 reflektiert werden. Im dargestellten Beispiel liegt die Referenzmarke 6 leicht unter der senkrecht zur Drehachse 2 liegenden Ebene, in welcher die Lichtsender 4,5 ausgerichtet sind. Eine genaue Beschreibung dieses Berechnungsvorganges ist in der eingangs erwähnten Veröffentlichung WO 94/0078 dargestellt.

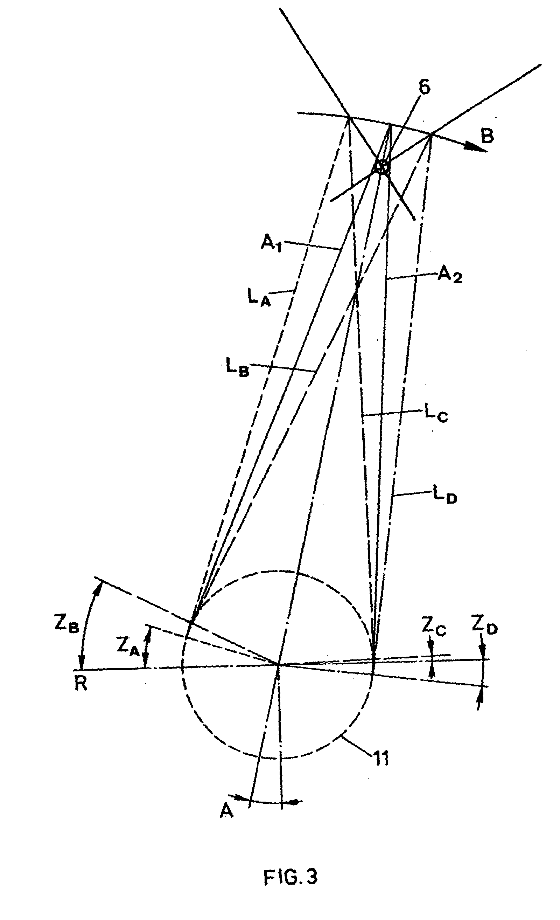

In Figur 3 ist nun schematisch der Messvorgang mittels einer erfindungsgemässen Anordnung der Lichtsender dargestellt. So ist hier die beanspruchte Ausführungsform mit vier Lichtsendern dargestellt, welche symmetrisch auf einer Kreisbahn 11 angeordnet sind, wobei jeweils die benachbarten Lichtsender entgegengesetzt tangential zur Kreisbahn 11 ihre Lichtstrahlen resp. Lichtfächer $L_{A,...,D}$ aussenden. Die Lichtfächer $L_{A,B}$ resp. $L_{C,D}$ der jeweils in dieselbe Richtung aussendenden Lichtsender sind vorzugsweise gegeneinander in einem Winkel angeordnet, vorzugsweise um 90°. Dies ist in Figur 3 wiederum durch die zwei senkrecht aufeinander stehenden Linien dargestellt, welche die Referenzmarkierung 6 kreuzen. Der mit Pfeil versehene Bogen B stellt wiederum die horizontale Ebene dar, in welcher die Lichtsender ausgerichtet sind.

Die gestrichelten Linien $L_A, L_B, L_C$ und $L_D$ stellen nun die Lichtfächer der Lichtsender im Moment dar, in welchem die jeweiligen Lichtfächer von der Referenzmarkierung 6 reflektiert werden. Die Winkel resp. die Zählerstände dieser Lichtfächer werden hier ebenfalls bezüglich einer Referenzlinie R erfasst. In diesem Beispiel sind dies die Winkel $Z_A, Z_B, Z_C$ und $Z_D$, welche nach der obig beschriebenen Methode aus den Zählerständen berechnet werden. Um den Azimutwinkel A von der Messeinrichtung 1 aus zur Referenzeinrichtung 6 zu berechnen, können nun die Mittelwerte dieser Winkel wie folgt gebildet werden:

$$A_1 = \frac{Z_A + Z_B}{2} \qquad (1)$$

$$A_2 = \frac{Z_C + Z_D}{2} \qquad (2)$$

und schliesslich der Azimutwinkel A :

$$A = \frac{A_1 + A_2}{2} \qquad (3)$$

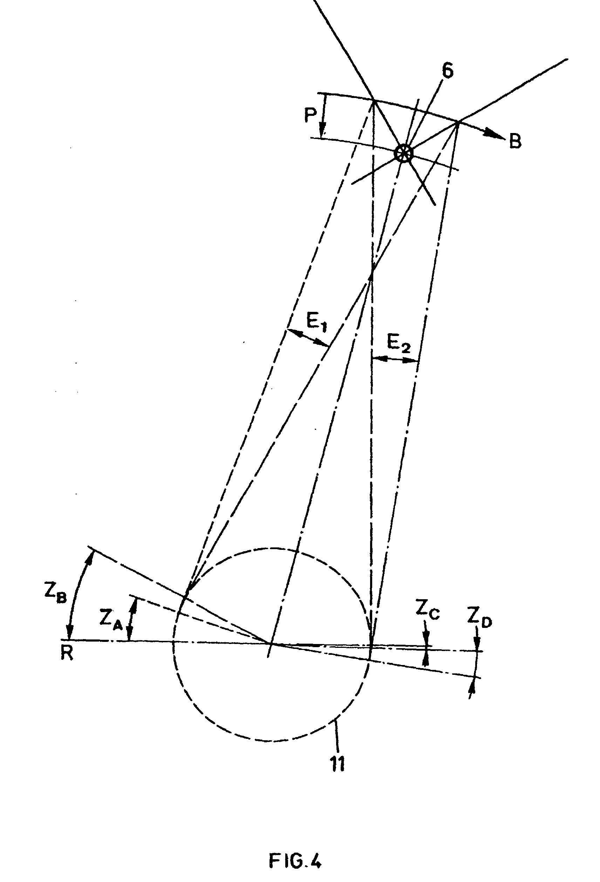

Die Elevation, d.h. der bezüglich der Ebene B der Lichtsender gemessene Winkel der Referenzmarkierung 6, lässt sich, wie in Figur 4 schematisch dargestellt, fogendermassen berechnen :

$$E_1 = \frac{Z_B - Z_A}{2} \qquad (4)$$

$$E_2 = \frac{Z_C - Z_D}{2} \qquad (5)$$

und schliesslich der Elevationswinkel P

$$P = \frac{E_1 + E_2}{2} \qquad (6)$$

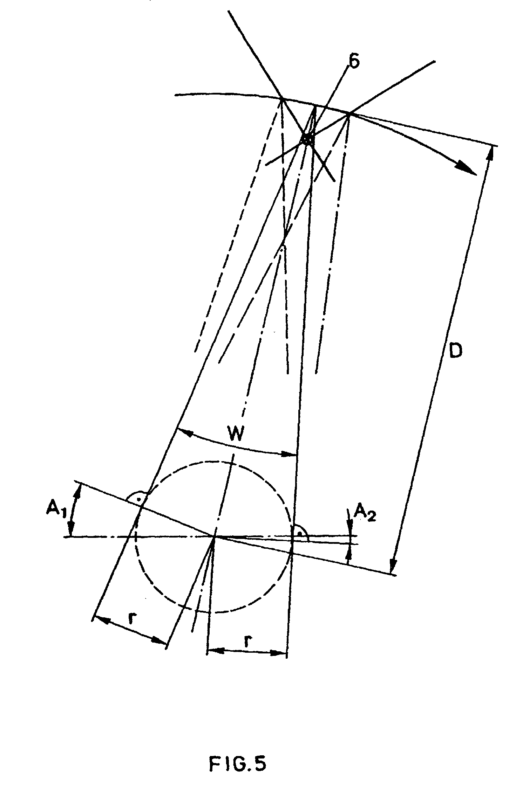

Mit der erfindungsgemässen Anordnung lässt sich nun auch einfach eine Distanzberechnung durchführen, wie in Figur 5 schematisch dargestellt ist. Hierfür werden erneut die Azimutdaten gemäss Figur 3, resp. der Formeln (1) und (2), verwendet. Durch die Berechnung des Zwischenwinkels W und Einbezug des halben Abstandes r der Lichtsender untereinander kann die Distanz D von der Messeinrichtung 1 zur Referenzeinrichtung 6 einfach wie folgt berechnet werden :

$$D = \frac{\dfrac{W}{2}}{\sin \dfrac{W}{2}} \qquad (7),$$

wobei $W = A_1 - A_2$

Die erfindungsgemässe Vorrichtung liefert damit bei einem Umgang vorteilhafterweise alle erforderlichen Messwerte zur Berechnung der Elevations- und Azimutwinkel sowie der Distanz.

Vorzugsweise werden die Werte nur dann berechnet und weiterverarbeitet, wenn die von allen vier Lichtsendern reflektierten Signale empfangen werden. Dies kann durch eine einfache Überprüfung der berechneten Werte erfolgen, da die berechneten Zwischenwerte für Azimut $A_{1,2}$ und Elevation $E_{1,2}$ praktisch gleich sein müssen, und beim Fehlen eines der reflektierten Signale grosse Abweichungen zeigen.

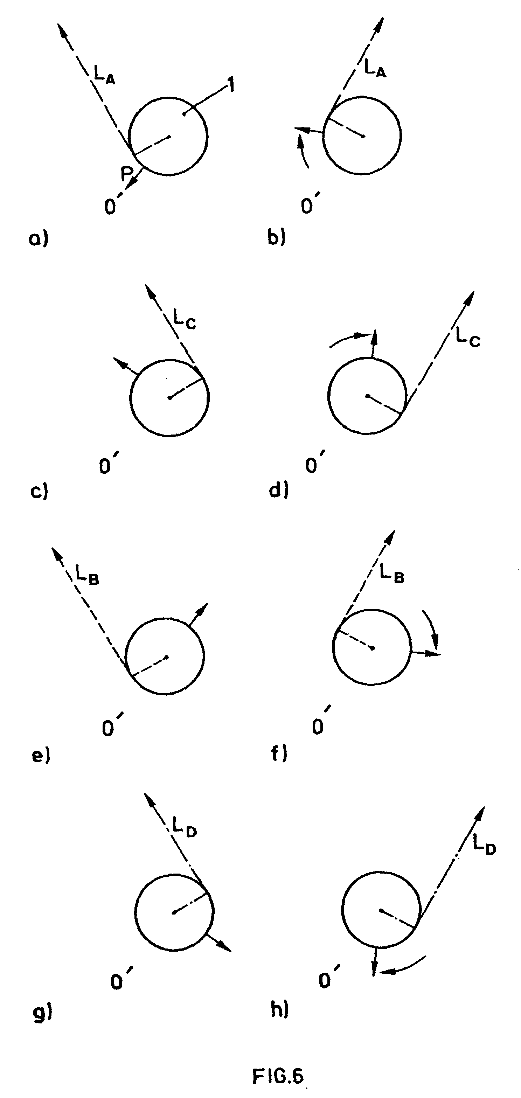

Erfindungsgemäss bevorzugterweise sollen die von den Lichtsendern ausgehenden Lichtfächer $L_{A,..,D}$ nur jeweils über bestimmte individuelle Winkelbereiche ausgesendet werden, welche jeweils auch gerade massgebend für die Berechung der Winkelwerte sein sollen. Dies ist beispielsweise aus Figur 6 a) bis h) ersichtlich, wo schematisch die Aufsicht auf den Mantel 3 der Messeinrichtung 1 dargestellt ist. Der Pfeil P zeigt in Figur 6 a) auf den Messausgangspunkt 0. Bei diesem Ausgangspunkt wird beispielsweise der erste Lichtsender aktiviert, welcher den Lichtfächer $L_A$ aussendet. Dabei ist der Abstrahlwinkel des Lichtfächers $L_A$ bezüglich dieses Ausgangspunktes fest definiert und kann für die Berechnung der Winkelwerte wie eingangs beschrieben verwendet werden. Beim Erreichen eines bestimmten Winkelwertes wird der Lichtfächer $L_A$, wie in Figur 6b) dargestellt, ausgeschaltet. Bei der weiteren Drehung werden die weiteren Lichtsender der Lichtfächer $L_B$ bis $L_D$ ebenfalls in bestimmten Winkelbereichen zu- resp. abgeschaltet, wie aus den Figuren 6c) bis h) ersichtlich ist. Diese Winkelbereiche werden beispielsweise wie dargestellt derart gewählt, dass von allen vier Lichtsendern im wesentlichen der gleiche Winkelbereich in Bezug auf die Messeinrichtung 1 bestrichen wird.

Bei der in diesen Figuren und Formeln dargestellten Berechnung wird davon ausgegangen, dass während der Messung der vier Basiswerte $Z_A,..,Z_D$ keine oder lediglich eine verschwinden kleine Relativbewegung zwischen der Referenzmarkierung 6 und der Messeinrichtung 1 auftritt, und somit die dargestellte Geometrie des Kreises 11 stimmt. Diese Annahme erweist sich bei hohen Umdrehungsgeschwindigkeiten der Messeinrichtung 1 und bei relativ grossen Abständen zwischen Messeinrichung 1 und Referenzmarkierung 6 als richtig. Wenn aber dieser Abstand verhältnismässig klein ist und gleichzeitig eine nicht mehr zu vernachlässigbare Relativbewegung vorhanden ist, so muss dies erfindungsgemäss kompensiert werden.

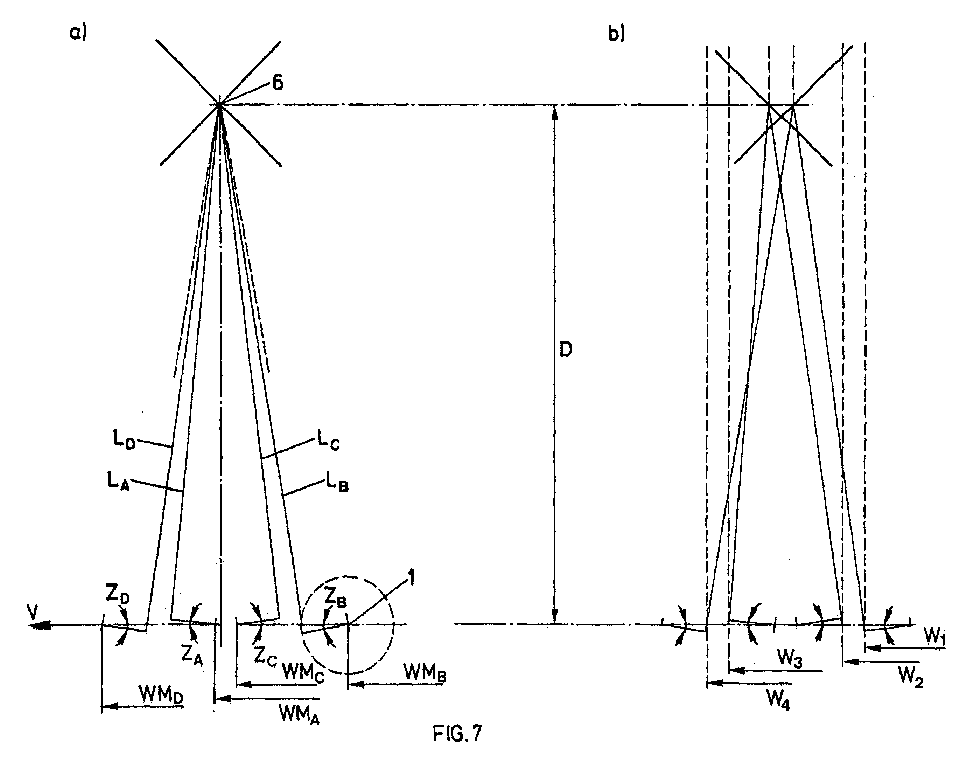

Die Erfassung resp. Berechnung einer derartigen Kompensation ist schematisch in Figur 7 dargestellt. Die Figur 7a) zeigt die durch die Referenzmarkierung 6 jeweils reflektierten Lichtfächer $L_A$ bis $L_D$ an den Stellen $WM_A$ bis $WM_D$ auf der Bewegungsachse V der Messeinrichtung 1. Die Stellen $WM_A$ bis $WM_D$ werden jeweils durch den Mittelpunkt resp. die Achse 2 der Messeinrichtung 1 festgelegt und werden durch eine eigene Wegmesseinrichtung herkömmlichen Aufbaues erfasst. Für die Berechnung der Distanz D zwischen der Bewegungsrichtung V und der Referenzmarkierung 6 werden jedoch die in Figur 7b) dargestellten Strecken $W_1$ bis $W_4$ benötigt. Diese lassen sich auf bekannte trigonometrische Weise folgendermassen berechnen, wobei der Wert für $W_1$ als Referenzpunkt auf Null gesetzt wird :

$$W_1 = 0 \qquad (8)$$

$$W_2 = WM_C - WM_B - \frac{R}{\cos Z_C} - \frac{R}{\cos Z_B} \qquad (9)$$

$$W_3 = WM_A - WM_B + \frac{R}{\cos Z_A} - \frac{R}{\cos Z_B} \qquad (10)$$

$$W_4 = WM_D - WM_B \cdot \frac{R}{\cos Z_C} - \frac{R}{\cos Z_B} \qquad (11)$$

Daraus lässt sich nun die Distanz D mittels nachfolgender Formeln berechnen :

$$D = \frac{W_4}{\sin(Z_D - Z_B)} * \cos Z_B * \cos Z_D \qquad (12)$$

$$D = \frac{W_3 - W_2}{\sin(Z_A - Z_C)} * \cos Z_C * \cos Z_A \qquad (13)$$

Diese beiden Werte können nun wiederum gemittelt werden.

Ausgehend von diesen Werten können nun wiederum mit bekannten trigonometrischen Berechnungen Elevationswerte ermittelt werden.

Es ist klar, dass entsprechend dem Anwendungsgebiet auch andere als in Figur 6 beispielshaft dargestellte Winkelabschnitte für die einzelnen Lichtsender bestimmt werden können. Gegebenenfalls können diese Winkelwerte auch dynamisch während laufender Messzyklen geändert resp. angepasst werden.

Vorzugsweise ist insbesondere Vorgesehen, dass die Lichtsender nicht nur auf einer Ebene B angeordnet sein sollen, sondern dass beispielsweise zwei oder mehrere übereinander liegende Ebenen mit Lichtsendern vorgesehen sind.

**Patentansprüche**

1. Verfahren zur optischen Messung der relativen Winkel zwischen einer Messeinrichtung (1) und davon entfernten Messpunkten mittels von der Messeinrichtung (1) ausgehenden optischen, zu einem Band aufgefächerten Strahlen ($L_{1,2}$), welche mittels an den Messpunkten angebrachten Reflektionsmitteln (6) zur Messeinrichtung zurückgespiegelt werden und von der Messeinrichtung (6) empfangen werden, wobei der ausgehende Lichtstrahl ($L_1, L_2$) um eine Achse (2) der Messeinrichtung (1) verschwenkt resp. rotiert wird, und dass beim Durchgang des Lichtstrahls ($L_1, L_2$) durch den Beginn eines bezüglich der Messeinrichtung (1) bestimmten Winkelbereiches mit einem Zähltakt zu zählen begonnen wird, bis der Lichtstrahl das Ende des Winkelbereiches erreicht hat, und beim Empfangen eines reflektierten, zurückgespiegelten Lichtstrahls ($R_1$) der jeweilige Zählerstand ($T_{1,2}$) gespeichert wird und die relativen Winkel ($Z_{1,2}$) durch Auswertung der Verhältnisse der Zählerstände ($T_{1,2,T}$) berechnet werden, **dadurch gekennzeichnet, dass** vier Lichtstrahlen ($L_{A,B,..}$) tangential zu einem bezüglich der Rotationsachse (2) zentrisch angeordneten Kreisbogen (11), jeweils um 90° in Bezug auf die Rotationsachse (2) aufeinander folgend versetzt angeordnet, ausgesendet werden, wobei jeweils alternierend Lichtstrahlen ($L_{A,B}$) in Rotationsrichtung und Lichtstrahlen ($L_{C,D}$) entgegen der Rotationsrichtung tangential ausgesendet werden.

2. Verfahren nach Anspruch 1, **dadurch gekennzeichnet, dass** jeder Lichtstrahl ($L_{A,...D}$) während der Rotation individuell in einem bestimmten Winkelbereich ausgesendet wird.

3. Verfahren nach Anspruche 1 oder 2, **dadurch gekennzeichnet, dass** bei der Berechnung der Winkel ($Z_{A,..D}$) die Relativbewegung (V) der Messeinrichtung (1) bezüglich der Reflektionsmittel (6) in der Form von zurückgelegten Distanzen ($WM_{1,..4}$) zum jeweiligen Zeitpunkt des Empfangs der reflektierten Signale mitberücksichtigt wird.

4. Verfahren nach Anspruch 3, **dadurch gekennzeichnet, dass** die Winkelstellungen ($Z_{A,...D}$) der reflektierten Lichtsignale ($L_{A,...D}$) während einer Umdrehung der Messeinrichtung (1) ermittelt und für die Berechnung der Elevations- und/oder Azimutwinkel und/oder Distanz verwendet werden.

5. Messeinrichtung zur Durchführung des Verfahrens nach einem der Ansprüche 1 bis 4, mit mindestens einem Lichtsender (4,5), einem lichtempfindlichen Sensor (7) und Zähl- und Auswertungsmittel, wobei der Lichtsender (4,5) und der Sensor (7) um eine Rotationsachse (2) der Messeinrichtung (1) rotierbar angeordnet sind, **dadurch gekennzeichnet, dass** axialsymmetrisch bezüglich der Rotationsachse (2) vier Lichtsenderaustritte um jeweils 90° versetzt angeordnet sind, wobei jeweils benachbarte Lichtsenderaustritte entgegengesetzte Austrittsrichtungen aufweisen, und die Austritte der Lichtsender (4,5) sowie der zugeörigen Sensoren (7) auf einem bezüglich der Rotationsachse (2) konzentrisch angeordneten Kreisbahn (11) tangential abstrahlend angeordnet sind.

6. Messeinrichtung nach Anspruch 5, **dadurch gekennzeichnet, dass** die Lichtsenderaustritte alle in derselben Ebene (B) senkrecht zur Rotationsachse (2) angeordnet sind.

7. Messeinrichtung nach Anspruch 5, **dadurch gekennzeichnet, dass** Lichtsenderaustritte und Sensoren auf mindestens zwei parallelen, bezüglich der Rotationsachse (2) senkrechten Ebenen angeordnet sind.

8. Messeinrichtung nach einem der Ansprüche 5 bis 7, **dadurch gekennzeichnet, dass** die Lichtsender resp. Lichtsendeaustritte Laserlichtsender sind.

## Claims

1. Method of optical measurement of the relative angles between a measuring device (1) and measuring points remote therefrom by means of optical beams ($L_{1,2}$) emanating from the measuring device (1) and fanned into a band which are reflected back to the measuring device by means of reflecting means (6) mounted at the measuring points and are received by the measuring device (6), wherein the emitted light beam ($L_1$, $L_2$) is pivoted or rotated about an axis (2) of the measuring device (1), and as the light beam ($L_1$, $L_2$) passes through the beginning of an angular range determined with respect to the measuring device (1) counting is begun using a counting clock pulse until the light beam has reached the end of the angular range, and when a reflected light beam ($R_1$) is received the respective counter reading ($T_{1,2}$) is stored and the relative angles ($Z_{1,2}$) are calculated by evaluation of the relationships of the counter readings ($T_{1,2,T}$), **characterised in that** four light beams ($L_{a,b,..}$) are emitted tangentially to a circular arc (11) disposed centrally with respect to the axis of rotation (2) and are each offset successively by 90° with respect to the axis of rotation (2), wherein light beams ($L_{A,B}$) are emitted tangentially in the direction of rotation and light beams ($L_{C,D}$) are emitted tangentially against the direction of rotation.

2. Method as claimed in Claim 1, **characterised in that** each light beam ($L_{A,...D}$) is emitted individually in a specific angular range during the rotation.

3. Method as claimed in Claims 1 or 2, **characterised in that** in the calculation of the angles ($Z_{A,...,D}$) the relative movement (V) of the measuring device (1) with respect to the reflector means (6) is also taken into account in the form of distances covered ($WM_{1,...,4}$) at the respective time of reception of the reflected signals.

4. Method as claimed in Claim 3, **characterised in that** the angular positions ($Z_{A,...,D}$) of the reflected light signals ($L_{A,...,D}$) are determined during one revolution of the measuring device (1) and are used for the calculation of the elevation angle and/or azimuth angle and/or distance.

5. Measuring device for carrying out the method as claimed in one of Claims 1 to 4, with at least one light source (4, 5), a light-sensitive sensor (7) and counting and evaluation means, wherein the light source (4, 5) and the sensor (7) are disposed so as to be rotatable about an axis of rotation (2) of the measuring device (1), **characterised in that** in axial symmetry with respect to the axis of rotation (2) four light source outputs are disposed so that they are each offset by 90°, wherein in each case adjacent light source outputs have opposing output directions, and the outputs of the light sources (4, 5) as well as the appertaining sensors (7) are disposed so as to radiate tangentially on a circular path (11) disposed concentrically with respect to the axis of rotation (2).

6. Measuring device as claimed in Claim 5, **characterised in that** the light source outputs are all disposed in the same plane (B) perpendicular to the axis of rotation (2).

7. Measuring device as claimed in Claim 5, **characterised in that** light source outputs and sensors are disposed on at least two parallel planes which are perpendicular with respect to the axis of rotation (2).

8. Measuring device as claimed in one of Claims 5 to 7, **characterised in that** the light sources or light source outputs are laser light sources.

## Revendications

1. Procédé de mesure optique des angles relatifs entre une installation de mesure (1) et des points de mesure éloignés de celle-ci au moyen de rayons optiques ($L_{1,2}$) partant de l'installation de mesure (1), dispersés en éventail en une bande, qui sont réfléchis par des moyens de réflexion (6) disposés aux points de mesure à l'installation de mesure et sont reçus par l'installation de mesure (6), où le rayon de lumière sortant ($L_1$, $L_2$) est amené à pivoter respectivement à tourner autour d'un axe (2) de l'installation de mesure (1), et en ce que lors du passage du rayon de lumière ($L_1$, $L_2$) à travers le début d'une zone d'angle déterminée par rapport à l'installation de mesure (1), un compteur commence à compter selon une cadence de comptage jusqu'à ce que le rayon de lumière ait atteint l'extrémité de la zone d'angle et, lors de la réception d'un rayon de lumière ($R_1$) réfléchi, réflété, l'état de compteur respectif ($T_{1,2}$) est stocké, et les angles relatifs ($Z_{1,2}$) sont calculés par l'évaluation des rapports des états de compteur ($T_{1,2,T}$) **caractérisé en ce que** quatre rayons de lumière ($L_{A,B},..$) sont émis tangentiellement à un arc de cercle (11) disposé centralement par rapport à l'axe de rotation (2), disposés, en se faisant suite, d'une manière décalée respectivement de 90° par rapport à l'axe de rotation (2), où des rayons de lumière ($L_{A,B}$) respectivement alternants sont émis dans la direction de rotation et des rayons de lumière ($L_{C,D}$) tangentiellement contre la direction de rotation.

**2.** Procédé selon la revendication 1, **caractérisé en ce que** chaque rayon de lumière ($L_{A,...,D}$) est émis pendant la rotation individuellement dans une plage angulaire déterminée.

**3.** Procédé selon la revendication 1 ou 2, **caractérisé en ce que** lors du calcul des angles ($Z_{A,...D}$), on prend également en considération le déplacement relatif (V) de l'installation de mesure (1) par rapport aux moyens de réflexion (6) sous la forme de distances parcourues ($WM_1...,4$) à l'instant respectif de la réception des signaux réfléchis.

**4.** Procédé selon la revendication 3, **caractérisé en ce que** les positions angulaires ($Z_{A,...D}$) des signaux de lumière réfléchis ($L_{A,...D}$) sont déterminées pendant un tour de l'installation de mesure (1) et sont utilisées pour le calcul des angles d'élévation et/ou d'azimut et/ou de la distance.

**5.** Installation de mesure pour la mise en oeuvre du procédé selon l'une des revendications 1 à 4, avec au moins un émetteur de lumière (4, 5), un capteur (7) réagissant à la lumière et des moyens de comptage et d'évaluation, où l'émetteur de lumière (4, 5) et le capteur (7) sont disposés d'une manière tournante autour d'un axe de rotation (2) de l'installation de mesure (1), **caractérisée en ce que** sont disposées d'une manière axisymétrique par rapport à l'axe de rotation (2) quatre sorties d'émetteur de lumière, décalées respectivement de 90°, où des sorties d'émetteur de lumière respectivement avoisinantes présentent des directions de sortie opposées, et **en ce que** les sorties des émetteurs de lumière (4, 5) ainsi que des capteurs associés (7) sont disposés sur une trajectoire circulaire (11) disposée par rapport à l'axe de rotation (2) d'une manière concentrique, avec un rayonnement tangentiel.

**6.** Installation de mesure selon la revendication 5, **caractérisée en ce que** les sorties d'émetteur de lumière sont toutes disposées dans le même plan (B) perpendiculairement à l'axe de rotation (2).

**7.** Installation de mesure selon la revendication 5, **caractérisée en ce que** les sorties d'émetteur de lumière et les capteurs sont disposés sur au moins deux plans parallèles, perpendiculaires par rapport à l'axe de rotation (2).

**8.** Installation de mesure selon l'une des revendications 5 à 7, **caractérisée en ce que** les émetteurs de lumière respectivement les sorties d'émetteur de lumière sont des émetteurs de lumière laser.

FIG.1

FIG.2

FIG.3

FIG.4

FIG.5

FIG.6

FIG. 7

EP 0 797 108 B1